(19) **Europäisches Patentamt European Patent Office Office européen des brevets**

(11) **EP 4 760 080 A1**

(12) **EUROPEAN PATENT APPLICATION**

(43) Date of publication:
**17.06.2026 Bulletin 2026/25**

(21) Application number: **25221789.8**

(22) Date of filing: **09.12.2025**

(51) International Patent Classification (IPC):
*F02C 7/22* (2006.01)  *F02C 9/28* (2006.01)
*F23R 3/34* (2006.01)

(52) Cooperative Patent Classification (CPC):
**F02C 9/28; F02C 7/22; F23R 3/346;** F05D 2260/80;
F05D 2260/81; F05D 2270/101; F05D 2270/301;
F05D 2270/71

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.12.2024 US 202418978587**

(71) Applicant: **RTX Corporation**
**Farmington, CT 06032 (US)**

(72) Inventors:
• **SELSTAD, Tyler J**
**West Hartford (US)**
• **WARD, Glenn**
**Andover (US)**

(74) Representative: **Dehns**
**10 Old Bailey**
**London EC4M 7NG (GB)**

(54) **BURNER PRESSURE SYNTHESIS FROM FUEL SYSTEM PRESSURE**

(57) A method (200) includes determining a current burn flow value of a turbine engine (205), measuring a fuel pressure of a metered fuel flow of liquid fuel to a combustor of the turbine engine at a measurement point in a fuel system upstream of the combustor (210) and determining a current burner pressure as a function of the measured fuel pressure and the current burn flow value (215).

FIG. 2

EP 4 760 080 A1

**Description**

TECHNICAL FIELD

This disclosure relates generally to monitoring and control of turbine engines. More specifically, the present disclosure relates to methods and apparatus for synthesized determination of burner pressure in a combustor stage based on pressure measurements in a fuel system upstream of the combustor.

BACKGROUND

Keeping turbine engines operating within the boundaries of reliable operation (for example, surge and stall limits) is a perennial concern in turbine engine and turbine engine control system design. The potential consequences of a loss of turbine power from an engine stall or surge during flight are, without exaggeration, such that there is a near-insatiable demand in the art for refinement and enhanced redundancy of the monitoring and control systems which control the engine and provide user and system controllers (for example, Fully Autonomous Digital Engine Controls ("FADECs") or electronic engine controllers (EECs)) with data regarding the current values of parameters describing the current operating state of a turbine engine. Burner pressure, or the pressure in the fuel line at the point where fuel is injected into the combustor stage of a turbine engine (for example, a turbojet, turbofan, or turboshaft engine) is one of a plurality of parameters which provide actionable insight into the current operating state of a turbine engine, and from which the risk of error conditions such as stalls and surges can be assessed.

SUMMARY

This disclosure relates to the present disclosure relates to methods and apparatus for synthesized determination of burner pressure in a combustor stage based on pressure measurements in a fuel system upstream of the combustor.

In some examples, a method includes determining a current burn flow value of a turbine engine, measuring a fuel pressure of a metered fuel flow of liquid fuel to a combustor of the turbine engine at a measurement point in a fuel system upstream of the combustor, and determining a current burner pressure as a function of the measured fuel pressure and the current burn flow value.

In some examples, an apparatus includes an interface and a processor. The processor can be configured to determine a current burn flow value of a turbine engine, receive via the interface, a measurement of a fuel pressure of a metered fuel flow of liquid fuel to a combustor of the turbine engine at a measurement point in a fuel system upstream of the combustor and determine a current burner pressure as a function of the measured fuel pressure and the current burn flow value.

In some examples, a non-transitory, machine-readable medium contains instructions, which when executed by a processor comprising an interface, cause an apparatus to determine a current burn flow value of a turbine engine, receive via the interface, a measurement of a fuel pressure of a metered fuel flow of liquid fuel to a combustor of the turbine engine at a measurement point in a fuel system upstream of the combustor and determine a current burner pressure as a function of the measured fuel pressure and the current burn flow value.

Any single one or any combination of the following features may be used with the examples described above. The system may include at least one of: the current burn flow value of the turbine engine being determined by direct measurement. The current burn flow value of the turbine engine can be determined as a function of a pressure drop across a metering valve providing the metered fuel flow. The function of the measured fuel pressure can comprise a difference between the measured fuel pressure and a product of the current burn flow value, and an areal constant squared. The areal constant can comprise a modeled flow area of the fuel system between the measurement point and an outlet in the combustor. The modeled flow area of the fuel system between the measurement point and the outlet in the combustor can comprise a first value modeling a first area corresponding to fuel lines between the measurement point and one or more outlet nozzles in the combustor, and a second value modeling a second area corresponding to a total area of the one or more outlet nozzles in the combustor. The current burner pressure as the function of the measured fuel pressure and the current burn flow value can be given by:

$$P_B = P_F - \left(A_{E\,Line}{}^2 + A_{E\,Noz}{}^2\right)\left(\frac{WF}{K \cdot A_{E\,Line} \cdot A_{E\,Noz}}\right)^2$$

wherein $P_B$ is the current burner pressure;
wherein $P_F$ is the fuel pressure of the metered fuel flow to the combustor;

wherein *WF* is the current burn flow value of the turbine engine;

wherein K is proportional to the square root of fuel density;

wherein $A_{E\,Line}$ is the first value modeling a first area corresponding to fuel lines between the measurement point and one or more outlet nozzles in the combustor; and

wherein $A_{E\,Noz}$ is the second value modeling a second area corresponding to a total area of the one or more outlet nozzles in the combustor.

Other technical features may be readily apparent to one skilled in the art from the following figures, descriptions, and claims.

BRIEF DESCRIPTION OF THE DRAWINGS

For a more complete understanding of this disclosure, reference is made to the following description, taken in conjunction with the accompanying drawings, in which:

FIGURE 1 illustrates an example of a fuel and sensor system according to various embodiments of this disclosure; and
FIGURE 2 illustrates an example method for determining burner pressure at a turbine engine based on fuel pressure according to certain embodiments of this disclosure.

DETAILED DESCRIPTION

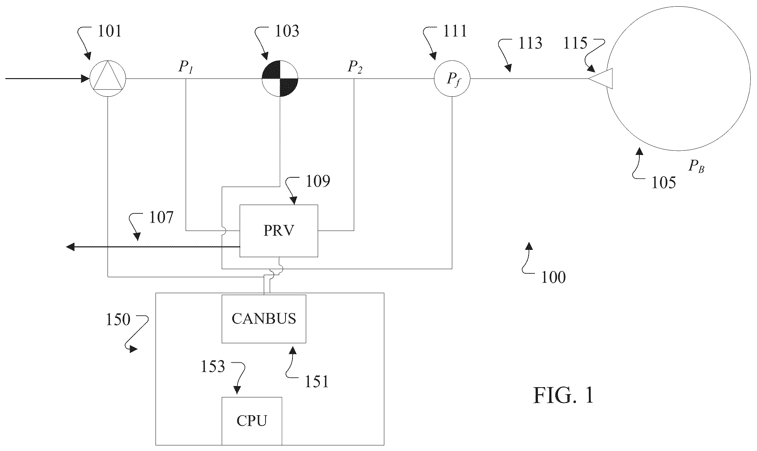

FIGURES 1-2, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

Keeping turbine engines operating within the boundaries of reliable operation (for example, surge and stall limits) is a perennial concern in turbine engine and turbine engine control system design. The potential consequences of a loss of turbine power from an engine stall or surge during flight are, without exaggeration, such that there is a near-insatiable demand in the art for refinement and enhanced redundancy of the monitoring and control systems which control the engine and provide user and system controllers (for example, Fully Autonomous Digital Engine Controls ("FADECs") or electronic engine controllers (EECs)) with data regarding the current values of parameters describing the current operating state of a turbine engine. Burner pressure, or the pressure in the burner stage of a turbine engine (for example, a turbojet, turbofan, or turboshaft engine) is one of a plurality of parameters which provide actionable insight into the current operating state of a turbine engine, and from which the risk of error conditions such as stalls and surges can be assessed.

While it is possible to provide sensors in the combustor, or close thereto, the extreme temperatures (i.e., 2000° Fahrenheit, and in some modern engines, approaching 3000° Fahrenheit) achieved in the combustor, absent judicious coating and material choices, melt most metals, which, by implication, imposes limits on the durability, accuracy and reliability of such sensors. As an alternative or adjunct to direct monitoring of burner pressure by sensors in the combustor, a preferred approach is to calculate burner pressure as a function of multiple parameters of an engine model, such as by a continuous mass flow (CMF) model of the engine. Although perfectly suitable for ensuring the safe operation of aircraft, such model-based approaches to inferring burner pressure are susceptible to creeping inaccuracy due to the fact that, over the course of their operational lives, turbine engines wear, loosen, and otherwise move away from the initial, factory-fresh conditions underlying assumed by the engine model in unique ways. Simply put, predicting the exact course of a turbine engine's wear over its life cycle presents too many variables to account for. As such, the fit between a turbine engine as modeled, and the same turbine engine as it actually is, loosens over time, and by implication, so too, can the correspondence between the values of a measured parameter and parameters determined based on engine models. Additionally, engine models can be computationally expensive to implement.

Given the importance of having current, accurate burner pressure data to ensuring reliable operation of a turbine engine, embodiments according to the present disclosure provide systems and methods for determining burner pressure from fuel system pressure. Systems and methods according to this disclosure can, in some embodiments, be used as an alternative to engine model-based approaches to determining burner pressure. Systems and methods according to this disclosure can, in some embodiments, be used as an adjunct to model-based approaches to determining burner pressure, thereby providing a further layer of assurance that reliable burner pressure data can be provided to FADECs and other aircraft control systems.

FIGURE 1 illustrates, in schematic format, an example fuel and sensor system 100 from which burner pressure can be determined without using a traditional engine model, according to various embodiments of this disclosure.

Referring to the illustrative example of FIG. 1, fuel and sensor system 100 comprises one or more fuel pumps 101, which draw fuel from the fuel tanks (for example, tanks in an aircraft's wings, or, in the case of some military aircraft, drop tanks) and provide a pressurized flow of liquid fuel to metering valve 103, which is configured to provide a metered portion of fuel downstream towards combustor 105, and return, via line 107, a portion of the fuel back to the tank. Metering valve 103 can operate under the control of one or more computerized systems for managing the operation of a turbine engine, including, without limitation, a FADEC or EEC. As fuel passes through metering valve 103, the pressure drops across metering valve 103 from an upstream pressure $P_1$ to a downstream pressure $P_2$. As shown in the figures, the pressure drop across metering valve 103 can be measured by a combined pressure regulation valve / pressure sensor 109, which can, depending on the pressure drop across metering valve 103, can be cycled on the upstream side of metering valve 103, or returned to the fuel tank via line 107 if the upstream pressure, $P_1$ is too high. In certain embodiments, the burn flow *WF* of the engine can be estimated based on the pressure drop across metering valve 103. As used in this disclosure, the expression "burn flow" encompasses a mass per unit time (for example, pounds per hour) of fuel passing through the engine at a given time. In some embodiments, burn flow *WF* can be measured directly by one or more sensors within fuel and sensor system 100. In some embodiments, a current value of burn flow *WF* can be synthesized, for example based on a stroke to flow map.

Continuing downstream from metering valve 103, fuel and sensor system 100 further comprises a fuel pressure sensor 111, which obtains a value of the liquid fuel pressure $P_F$ at a measurement point upstream of combustor 105. One or more sections of fuel line 113 connect fuel pressure sensor 111 to one or more combustor nozzles 115 by which fuel is injected into the combustor 105. Sections of fuel line 113 and combustor nozzles 115 can be modeled as an aperture having an effective area, $A_E$.

$$A_E = \frac{A_{E\,Line} \cdot A_{E\,NOZ}}{\sqrt{\left(A_{E\,Line}{}^2 + A_{E\,Noz}{}^2\right)}}$$

Where $A_{E\,Line}$ is a first value modeling a first effective area corresponding to fuel line 113 between the measurement point and combustor nozzles 115. Where $A_{E\,Noz}$ is a second value modeling a second area corresponding to a second effective area of the one or more outlet nozzles in the combustor.

From this, the relationship between burn flow and burner pressure can be expressed as:

$$WF = K \cdot A_E \sqrt{\Delta P}$$

Where *WF* is the current burn flow value of the turbine engine, *K* is a density of the liquid fuel, $A_E$ is the effective area of the downstream flow path between fuel pressure sensor 111 and the one or more combustor nozzles 115, and ΔP is the pressure drop between $P_F$ the fuel pressure of the metered fuel flow to the combustor stage at fuel pressure sensor 111, and $P_B$ is the current burner pressure. From this, the current burner pressure $P_B$, as a function of the fuel pressure $P_F$ at a predetermined measurement point upstream of the one or more combustor nozzles 115, can be given as:

$$P_B = P_F - \left(A_{E\,Line}{}^2 + A_{E\,Noz}{}^2\right)\left(\frac{WF}{K \cdot A_{E\,Line} \cdot A_{E\,Noz}}\right)^2$$

Fuel and sensor system 100 can, in some embodiments include one or more controller(s) 150, which provide a digital control platform for interfacing with and sending control signals to one or more of the system components shown in FIG. 1. Controller(s) 150 can include one or more interfaces 151 (for example, a control area network bus ("CANBUS") interface) for receiving data from the sensors shown in FIG. 1, and for providing control signals to one or more of fuel pump 101 and metering valve 103. Additionally, controller(s) 150 can include one or more processors 153, which can be CPU type processors configured to execute programs executing in an operating system, or can also be application-specific processors (for example, ASIC or system-on-a-chip ("SOC")) processors.

As shown above, embodiments according to the present disclosure provide a robust way of measuring burner pressure that is independent of the correspondence to which an engine in post-factory condition adheres to a model designed around parameters measured at the time of construction, or of any sensors in directly exposed to the extreme heat of the combustor. As such, embodiments as disclosed provide a mechanism by which one or more engine control systems, such as FADECs, EECs, or even electromechanical systems can ensure that engine control systems are reliably provided with current values of burner pressure.

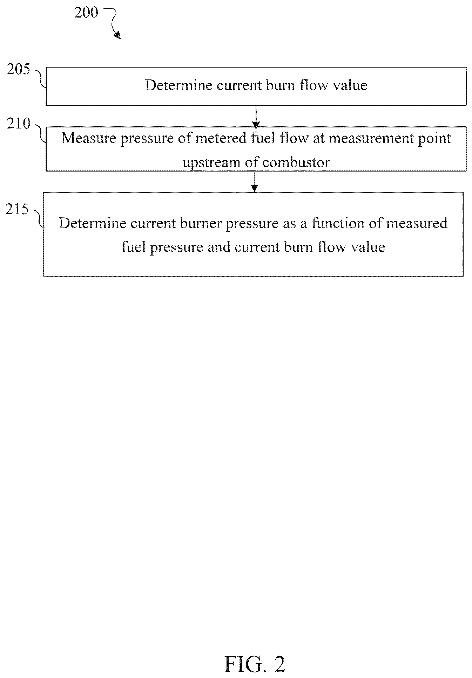

FIGURE 2 illustrates operations of an example method for measuring burner pressure from fuel system pressure in a fuel/sensor system of an aircraft (for example, fuel and sensor system 100 in FIG. 1) according to certain embodiments of this disclosure.

Referring to the illustrative example of FIG. 2, at operation 205, the current burn flow value of a turbine engine is determined. As used in this disclosure, the expression "burn flow value" is an expression of the mass flow rate of fuel passing into the turbine engine for combustion. In some embodiments, the burn flow value can be obtained directly, such as from a mass flow sensor situated downstream of a metering valve (for example, metering valve 103 in FIG. 1) regulating the flow of fuel to the turbine. Additionally, or alternatively, the burn flow value can be measured indirectly, for example, based on a pressure drop (for example, a pressure drop measured by pressure regulation valve/pressure sensor 109 in FIG. 1) across the metering valve.

At operation 210, a pressure in the fuel system at a measurement point (for example, $P_f$ as measured at fuel pressure sensor 111 in FIG. 1) at a point in the fuel system that is upstream from the one or more combustor nozzle(s) (for example, combustor nozzles 115 in FIG. 1) is obtained. According to certain embodiments, the pressure sensor from which the fuel pressure is obtained at operation 210 is, like a direct burn flow sensor, or a pressure sensor pair capable of indirectly measuring the burn flow, is connected to one or more of a FADEC, EEC or other engine control system.

At operation 215, the burner pressure is determined as a function of the measured fuel pressure and the current burn flow value of the engine. According to some embodiments, the current burn flow value of the engine is proportional to the fuel density multiplied by an effective area of the downstream fluid path (e.g., modeling the fluid path for the fuel between the measurement point and the outlet of the one or more combustor nozzles an aperture having a given effective aperture area), multiplied by the square root of the pressure drop between the measurement point and the outlet of the one or more combustor nozzles. The burner pressure can, in some embodiments, be given as:

$$P_B \;=\; P_F - \left(A_{E\,Line}{}^2 + A_{E\,Noz}{}^2\right)\left(\frac{WF}{K \cdot A_{E\,Line} \cdot A_{E\,Noz}}\right)^2$$

where $P_B$ is the current burner pressure;

where $P_F$ is the fuel pressure of the metered fuel flow to the combustor stage;

where $WF$ is the current burn flow value of the turbine engine;

where $K$ is proportional to the square root of fuel density of the liquid fuel;

where $A_{E\,Line}$ is a first value modeling a first area corresponding to fuel lines between the measurement point and one or more outlet nozzles in the combustor; and

where $A_{E\,Noz}$ is a second value modeling a second area corresponding to a total area of the one or more outlet nozzles in the combustor.

While embodiments according to the present disclosure have been described with reference to turbofan engines and determination of burner pressure via a FADEC or other electronic apparatus, embodiments according to this disclosure are not so limited, and can be implemented mechanically or electromechanically by apparatus configured to amplify a measured value of the burn flow according to the equation given above.

It may be advantageous to set forth definitions of certain words and phrases used throughout this patent document. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component" , "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

**EP 4 760 080 A1**

**Claims**

1. A method, comprising:

   determining a current burn flow value of a turbine engine;
   measuring a fuel pressure of a metered fuel flow of liquid fuel to a combustor of the turbine engine at a measurement point in a fuel system upstream of the combustor; and
   determining a current burner pressure as a function of the measured fuel pressure and the current burn flow value.

2. The method of Claim 1, wherein the current burn flow value of the turbine engine is determined by direct measurement, and/or wherein the current burn flow value of the turbine engine is determined as a function of a pressure drop across a metering valve providing the metered fuel flow.

3. The method of Claim 1 or 2, wherein the function of the measured fuel pressure comprises a difference between the measured fuel pressure and a product of the current burn flow value and an areal constant squared.

4. The method of Claim 3, wherein the areal constant comprises a modeled flow area of the fuel system between the measurement point and an outlet in the combustor.

5. The method of Claim 4, wherein the modeled flow area of the fuel system between the measurement point and the outlet in the combustor comprises a first value modeling a first area corresponding to fuel lines between the measurement point and one or more outlet nozzles in the combustor, and a second value modeling a second area corresponding to a total area of the one or more outlet nozzles in the combustor.

6. The method of Claim 5, wherein the current burner pressure as the function of the measured fuel pressure and the current burn flow value is given by:

$$P_B = P_F - \left(A_{E\,Line}^{\;2} + A_{E\,Noz}^{\;2}\right)\left(\frac{WF}{K \cdot A_{E\,Line} \cdot A_{E\,Noz}}\right)^2$$

   wherein $P_B$ is the current burner pressure;
   wherein $P_F$ is the fuel pressure of the metered fuel flow to the combustor;
   wherein $WF$ is the current burn flow value of the turbine engine;
   wherein K is a density of the liquid fuel;
   wherein $A_{E\,Line}$ is the first value modeling the first area corresponding to the fuel lines between the measurement point and the one or more outlet nozzles in the combustor; and
   wherein $A_{E\,Noz}$ is the second value modeling the second area corresponding to the total area of the one or more outlet nozzles in the combustor.

7. An apparatus, comprising:

   an interface; and
   a processor configured to:

      determine a current burn flow value of a turbine engine;
      receive via the interface, a measurement of a fuel pressure of a metered fuel flow of liquid fuel to a combustor of the turbine engine at a measurement point in a fuel system upstream of the combustor; and
      determine a current burner pressure as a function of the measured fuel pressure and the current burn flow value.

8. The apparatus of Claim 7, wherein the processor is further configured to:

   determine the current burn flow value of the turbine engine based on direct measurement: and/or
   determine the current burn flow value of the turbine engine based on a pressure drop across a metering valve providing the metered fuel flow.

9. The apparatus of Claim 7 or 8, wherein the function of the measured fuel pressure comprises a difference between the measured fuel pressure and a product of the current burn flow value and an areal constant squared.

10. The apparatus of Claim 9, wherein the areal constant comprises a modeled flow area of the fuel system between the measurement point and an outlet in the combustor.

11. The apparatus of Claim 10, wherein the modeled flow area of the fuel system between the measurement point and the outlet in the combustor comprises a first value modeling a first area corresponding to fuel lines between the measurement point and one or more outlet nozzles in the combustor, and a second value modeling a second area corresponding to a total area of the one or more outlet nozzles in the combustor, optionally wherein the current burner pressure as the function of the measured fuel pressure and the current burn flow value is given by:

$$P_B = P_F - \left(A_{E\,Line}^2 + A_{E\,Noz}^2\right)\left(\frac{WF}{K \cdot A_{E\,Line} \cdot A_{E\,Noz}}\right)^2$$

wherein $P_B$ is the current burner pressure;
wherein $P_F$ is the fuel pressure of the metered fuel flow to the combustor;
wherein $WF$ is the current burn flow value of the turbine engine;
wherein K is a density of the liquid fuel;
wherein $A_{E\,Line}$ is the first value modeling the first area corresponding to the fuel lines between the measurement point and the one or more outlet nozzles in the combustor; and
wherein $A_{E\,Noz}$ is the second value modeling the second area corresponding to the total area of the one or more outlet nozzles in the combustor.

12. A non-transitory, machine-readable medium containing instructions, which when executed by a processor comprising an interface, cause an apparatus to:

determine a current burn flow value of a turbine engine;
receive via the interface, a measurement of a fuel pressure of a metered fuel flow of liquid fuel to a combustor of the turbine engine at a measurement point in a fuel system upstream of the combustor; and
determine a current burner pressure as a function of the measured fuel pressure and the current burn flow value.

13. The non-transitory, machine-readable medium of Claim 12, wherein the function of the measured fuel pressure comprises a difference between the measured fuel pressure and a product of the current burn flow value and an areal constant squared, optionally further comprising instructions, which when executed by the processor, cause the apparatus to determine the current burn flow value of the turbine engine based on a pressure drop across a metering valve providing the metered fuel flow.

14. The non-transitory, machine-readable medium of Claim 13, wherein the areal constant comprises a modeled flow area of the fuel system between the measurement point and an outlet in the combustor.

15. The non-transitory, machine-readable medium of Claim 14, wherein the modeled flow area of the fuel system between the measurement point and the outlet in the combustor comprises a first value modeling a first area corresponding to fuel lines between the measurement point and one or more outlet nozzles in the combustor, and a second value modeling a second area corresponding to a total area of the one or more outlet nozzles in the combustor, optionally wherein the current burner pressure as the function of the measured fuel pressure and the current burn flow value is given by:

$$P_B = P_F - \left(A_{E\,Line}^2 + A_{E\,Noz}^2\right)\left(\frac{WF}{K \cdot A_{E\,Line} \cdot A_{E\,Noz}}\right)^2$$

wherein $P_B$ is the current burner pressure;
wherein $P_F$ is the fuel pressure of the metered fuel flow to the combustor;
wherein $WF$ is the current burn flow value of the turbine engine;
wherein K is a density of the liquid fuel;

wherein $A_{E\,Line}$ is the first value modeling the first area corresponding to the fuel lines between the measurement point and the one or more outlet nozzles in the combustor; and

wherein $A_{E\,Noz}$ is the second value modeling the second area corresponding to the total area of the one or more outlet nozzles in the combustor.

FIG. 1

100

105 — $P_B$

115

113

111 — $P_f$

$P_2$

103

109 — PRV

$P_1$

107

101

150

151 — CANBUS

153 — CPU

200

205
Determine current burn flow value

210
Measure pressure of metered fuel flow at measurement point upstream of combustor

215
Determine current burner pressure as a function of measured fuel pressure and current burn flow value

FIG. 2

Europäisches
Patentamt
European
Patent Office
Office européen
des brevets

# EUROPEAN SEARCH REPORT

**Application Number**

EP 25 22 1789

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 434 877 A1 (ROLLS ROYCE PLC [GB]) 30 January 2019 (2019-01-30) | 1-3,7-9, 12,13 | INV.<br>F02C7/22 |
| A | * paragraphs [0057] - [0064] *<br>* figures 2,6 * | 4-6,10, 11,14,15 | F02C9/28<br>F23R3/34 |
| X | US 2022/403783 A1 (MILLER BRANDON W [US] ET AL) 22 December 2022 (2022-12-22)<br>* paragraph [0068] *<br>* figure 4 * | 1,7,12 | |
| A | US 2010/011851 A1 (HEALY TIMOTHY ANDREW [US] ET AL) 21 January 2010 (2010-01-21)<br>* paragraph [0012] *<br>* figures 1,2 * | 1-15 | |

**TECHNICAL FIELDS SEARCHED (IPC)**

F02C
F23R

The present search report has been drawn up for all claims

| Place of search | Date of completion of the search | Examiner |
|---|---|---|
| The Hague | 17 April 2026 | Gebker, Ulrich |

EPO FORM 1503 03.82 (P04C01)

**EP 4 760 080 A1**

## ANNEX TO THE EUROPEAN SEARCH REPORT
## ON EUROPEAN PATENT APPLICATION NO.

EP 25 22 1789

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2026

| Patent document cited in search report | | | Publication date | Patent family member(s) | | | Publication date |
|---|---|---|---|---|---|---|---|
| EP 3434877 | | A1 | 30-01-2019 | EP | 3434877 | A1 | 30-01-2019 |
| | | | | US | 2019032576 | A1 | 31-01-2019 |
| US 2022403783 | | A1 | 22-12-2022 | US | 2022403783 | A1 | 22-12-2022 |
| | | | | US | 2023265796 | A1 | 24-08-2023 |
| | | | | US | 2025035041 | A1 | 30-01-2025 |
| US 2010011851 | | A1 | 21-01-2010 | CH | 697864 | A2 | 13-03-2009 |
| | | | | CN | 101382512 | A | 11-03-2009 |
| | | | | CN | 102865148 | A | 09-01-2013 |
| | | | | DE | 102008044473 | A1 | 12-03-2009 |
| | | | | JP | 2009062990 | A | 26-03-2009 |
| | | | | US | 2009064682 | A1 | 12-03-2009 |
| | | | | US | 2010011851 | A1 | 21-01-2010 |

EPO FORM P0459

For more details about this annex : see Official Journal of the European Patent Office, No. 12/82